# EUROPEAN PATENT APPLICATION

(11) **EP 4 727 088 A1**
(43) Date of publication of application: **15.04.2026**
(21) Application number: 25192781.0
(22) Date of filing: 30.07.2025
(51) Int. Cl.: H04L 65/1069, H04L 65/403, H04W 4/02, H04W 4/80, H04L 9/40, H04L 65/40, H04W 12/06

(54) **SYSTEMS AND METHODS FOR ECHO PREVENTION USING WIRELESS COMMUNICATIONS**

(30) Priority: 10.10.2024 US 202418912531
(71) Applicant: INTEL Corporation, Santa Clara, CA 95054 (US)
(72) Inventor: MANEPALLI, Sangeeta, Chandler (US); SRIVASTAV, Abhishek, 560035 Bangalore (IN); VALAPPILEKANDY, Jithin, 560103 Bangalore (IN); KAPILA, Smit, 560102 Bangalore (IN); SINGH, Balvinder Pal, 490020 Bhilai (IN)
(74) Representative: Viering, Jentschura & Partner mbB Patent- und Rechtsanwälte

(57) **Abstract**

This disclosure describes systems, methods, and devices for remotely controlling device settings for collaboration sessions. A device may identify an alphanumeric handle based on a location identifier of a first location associated with the device and a collaboration session identifier for a collaboration session of a collaboration application executed by the device; generate a Bluetooth Low Energy (BLE) advertising packet including a header and a payload, the header including the alphanumeric handle and a hardware identifier that identifies the device; transmit the BLE advertising packet; identify an authentication request received from a second device in the collaboration session, the authentication request including the alphanumeric handle; authenticate the second device based on the alphanumeric handle; and transmit a BLE notification packet including an indication of a volume at which the second device is to set a speaker for the collaboration session.

## Description

### TECHNICAL FIELD

This disclosure generally relates to systems and methods for wireless communications and, more particularly, to using wireless communications to prevent echo in virtual meetings.

### BACKGROUND

When virtual meeting participants do not mute their microphones, echo can occur, disrupting the meeting for all participants. There is a need to prevent echo without requiring users to manually mute their microphones.

### BRIEF DESCRIPTION OF THE DRAWINGS

FIG. 1 is an example wireless communications environment for a collaboration call, in accordance with one or more example embodiments of the present disclosure.
FIG. 2 is an example architecture for wireless control of audio and video in a collaboration call, in accordance with one or more example embodiments of the present disclosure.
FIG. 3 is an example of conference rooms with collaboration call participants in various topologies, in accordance with one or more example embodiments of the present disclosure.
FIG. 4 is an example flow for a process for authenticating devices for a collaboration call, in accordance with one or more example embodiments of the present disclosure.
FIG. 5 is an example network of a primary device controlling other devices in a collaboration call, in accordance with one or more example embodiments of the present disclosure.
FIG. 6 is a flow for an example process of wirelessly controlling audio and video of other devices in a collaboration call, in accordance with one or more example embodiments of the present disclosure.
FIG. 7 is a block diagram illustrating components to perform any one or more of the methodologies discussed herein, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

The present disclosure improves the way that devices authenticate to and communicate with each other to avoid echo, particularly in situations in which multiple devices with the same active audio (e.g., for a meeting or other communication session) are close to each other (e.g., in a same room).

If participants in the same room do not mute their microphones during a conference call (e.g., a virtual meeting), it can lead to echo generation on the call, which can be disruptive and irritating. To prevent this and ensure a smooth collaboration, users may manually mute their microphones. Echo is caused by the received audio from a participant being picked up by the microphone of that same participant or another device or participant in that same room.

Some existing techniques prompt users to mute the microphones and/or speakers to prevent echo. However, existing manual solutions undermine user experience and are not always reliable, as not all users may mute in a timely manner. Meeting participants in a room may forget to mute, and once the echo is observed, all the users in the room check and manually mute their devices hastily. Moreover, this echo may also disrupt the ongoing call for several other users on the network as well. Some virtual meeting applications block audio automatically, but such solutions are application-specific and the success rate is often low.

The present disclosure leverages near-field communications, specifically Bluetooth Low Energy (BLE) communications (e.g., as defined by the IEEE 802.15 standards) to intelligently detect and identify devices in a given room or other geographic area, and control their volumes and/or microphones automatically (e.g., with proper user consent and in accordance with any relevant laws). The wireless communications may identify the relevant devices in a room whose volumes and/or microphones to control. Whereas multiple devices in different rooms may connect to a same Wi-Fi access point, BLE uses short-range capabilities to distinguish between devices in a same room versus devices in a different room. As a result, BLE allows for controlling the volumes and/or microphones of devices in a same room without controlling devices in another room. Also, BLE's short range allows for improved latency in comparison to longer range communications protocols such as Wi-Fi, as BLE allows for fast connecting and disconnecting, and short-range control signals.

In one or more embodiments, devices may include a common chassis design with a notification abstraction layer (NAL) to facilitate the BLE-based detection and controls. The NAL may be communication with operating system services, audiovisual devices and sensors (e.g., speakers, microphones, camera etc.), and software that integrates the device with other devices by using communications protocols such as Bluetooth, Wi-Fi, and the like. The common chassis design allows for any type of computer and any virtual meeting or other communication application to use the architecture for controlling audio and/or video of devices.

In one or more embodiments, for a given room or other location, and for a given meeting, an alphanumeric handle based on the room and meeting may facilitate the enhanced controls herein. For example, the alphanumeric handle may be a combination/hash created from a meeting identifier (e.g., a conference identifier) and a room (or other location) identifier. The integration software may extract the meeting identifier from the meeting/communications application and hash it with a room identifier. Each room may assign a primary device for the room, which may change, and as participants join the meeting (e.g., communication session with the conference identifier), the participants may be linked to the primary device in the respective room. The primary device in a room may be selected based on which device in a given room first joins the meeting, or may be selected randomly or selected by a user. When a primary device leaves a room, another device may be selected as the primary device in that room, whether randomly, based on user selection, or based on the order in which devices in that room joined the meeting.

In one or more embodiments, the primary device in a room may establish an NAL connection/channel over which an application profile may be established. For example, Table 1 below shows unique hashes for respective meeting rooms and their devices.

**Table 1: Example Hash and Room Coverage**

| **Unique HASH** | **Hosting Room** | **Echo Primary Device** | **Active Participants** |
|---|---|---|---|
| "alphanumeric_Handle1" | Room A | A1 | A1..A14 |
| "alphanumeric_Handle2" | Room B | B1 | B1..B14 |
| "alphanumeric_Handle3" | Room C | C1 | C1..C14 |

Referring to Table 1 above, the respective Primary Devices of each room amay transmit BLE advertising packets every 100 ms (or another time interval) that includes the Unique HASH, which may be received by the legitimate participants from each respective room. Then, each participant can request, through an application, an authentication request over the LE GATT (generic attribute) Profile to which they will be admitted post authentication. For example, valid users "A1...A14" for room A may be admitted into the meeting and can utilize the application for service management. Because of the Unique Hash for each meeting and room, devices that receive the BLE advertising packets may distinguish between packets from a primary device in the same room versus a primary device in another room, and may authenticate to the primary device in the same room so that only that primary device (e.g., rather than a primary device in another room) may control their audio and/or video. When a device in a room B responds (e.g., with an authentication request( to a BLE advertising packet from the primary device in room A, for example, the primary device in room A may reject the authentication of the device in room B, instead authenticating only the devices in the same room (e.g., Room A). The authentication process may allow the primary device (e.g. in room A), to identify the details (e.g., a user identifier such as an email address, name of the collaborative call's invitee, etc.) of the requester along with the alphanumeric handle. As a part of authentication and admitting process for the requesting devices, the collaborative application may cross-verify the legitimacy of the user by checking the requester is included in the invitee's list of a particular collaborative call. The use of BLE should reduce the number of devices in one room receiving a BLE advertisement from a primary device in another room (e.g., because of BLE's short range transmissions), and the HASH should prevent any authentication between a primary device in one room and a controllable device in another room.

It should be noted that BLE advertising packets as used herein refer to a specific type of BLE packet sent on a particular advertisement channel (e.g., of 1 MHz width) within the Bluetooth frequency spectrum (e.g., the spectrum ranging from 2402 MHz to 2480 MHz). The BLE advertisement channel is dedicated to advertising packets, in contrast with data packets. A BLE advertisement packet may be sent on three advertising channels in the spectrum, in time-sequence based on a time interval delay between each transmission. BLE advertising packets include a header and a payload. In one or more embodiments, the BLE advertising notification packet herein, carrying the unique hash, may use the format of Table 2 below:

**Table 2: Example BLE Advertising Notification Packet Format**

| | | | |
|---|---|---|---|
| **Field:** | Header | Payload | End |
| **Bits:** | B0-B64 | B65-B122 | B123-B127 |

The header may include a hardware identifier and the alphanumeric handle to detect the type of hardware device and environment (e.g., room) in which the device is located. An example format of the header is shown in Table 3.

**Table 3: Example Header Format of BLE Advertising Packet**

| | | | |
|---|---|---|---|
| **Sub-Field:** | Header | Payload | End |
| **Bits:** | B0-B7 | B8-B23 | B24-B63 |

Based on the alphanumeric handle, a device is identified if it is there in a particular conference room, and accordingly the notification packet is updated and shared with other devices in the room. A device that receives a BLE advertising notification packet from the same room may respond with an authentication request. When a device is authenticated, the primary device in that room may send control commands to an authenticated device to control audiovisual settings. For example, Table 4 shows an example format of the payload sub-field of Table 2.

**Table 4: Example Payload of BLE Advertising Packet**

| | | | | | |
|---|---|---|---|---|---|
| **Sub-Field:** | Audio Data | Video Data | Camera Data | Sensor Data | Reserved |
| **Bits:** | B65-B68 | B69-B72 | B73-B76 | B77-B80 | B81-B122 |

As shown in Table 4, the payload of the BLE advertising packet may include commands for setting audio data (e.g., volume), video data (e.g., compression level/technique), camera data (e.g., on/off), and other sensor data for a controlled device. For example, the Audio Data sub-field may use at least two bits to set the volume: 00 may correspond to a mute, 01 may correspond to a 5% volume, 10 may be NA, and 11 may be no change to the current volume. Other levels and/or instructions may be signaled. The reserved bits may be used to restore the volume to an original volume (e.g., after a meeting ends), and/or to manage audio endpoints (e.g., onboard speaker, microphone, Bluetooth, earpiece, headphones, etc.) on client and host systems.

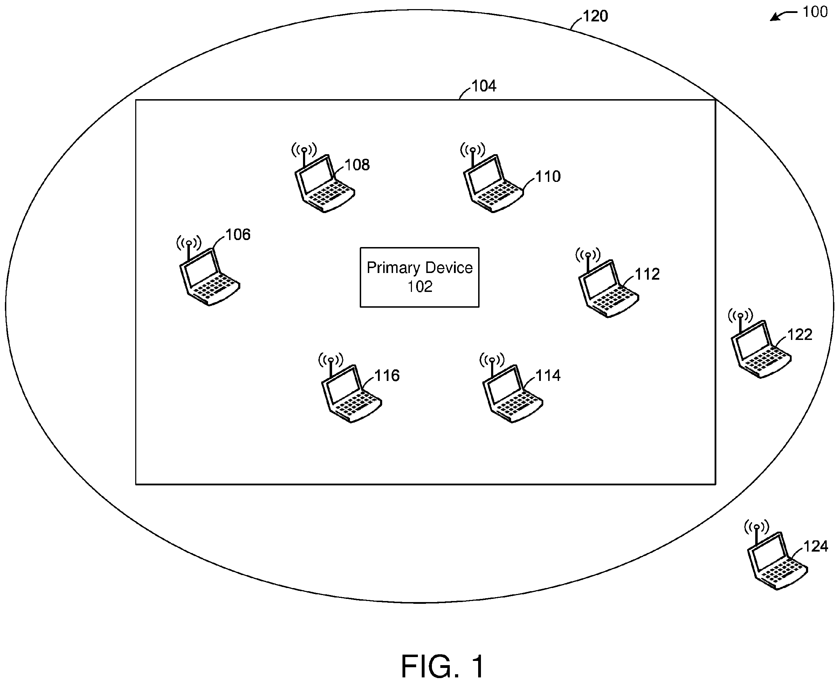

FIG. 1 is an example wireless communications environment 100 for a collaboration call, in accordance with one or more example embodiments of the present disclosure.

Referring to FIG. 1, a primary device 102 may host a collaboration session as a primary device in room 104 (or other limited geographical location). In the same room 104 may be multiple other devices that may join the collaboration session (e.g., device 106, device 108, device 110, device 112, device 114, device 116, etc.). The devices in the room 104 may be within a BLE range 120 of the primary device 102. The primary device 102 may be any device capable of hosting a virtual meeting and/or phone call.

Still referring to FIG. 1, outside the room 104, but within the BLE range 120 of the primary device 102, may be other devices (e.g., device 122) capable of receiving BLE advertising packets from the primary device 102. Outside the room 104 and outside the BLE range 120 of the primary device 102 may be other devices (e.g., device 124), which may not receive BLE advertising packets from the primary device 102. Devices within the BLE range 120 may be identified by the primary device 102 using a BLE attendance scan. Devices in the BLE range 120 and outside of the BLE range 120 may or may not attempt to join the collaboration session. To advertise the collaboration session and authenticate devices requesting authentication, the primary device 102 may send BLE advertising packets using the format of Tables 2-4, and including a unique hash according to Table 1. When a device in the BLE range 120 requests authentication to the primary device 102 for the collaboration session and is authenticated based on the unique hash, the primary device 102 may send control signals to any authenticated device to control audio, video, and the like, on the authenticated devices.

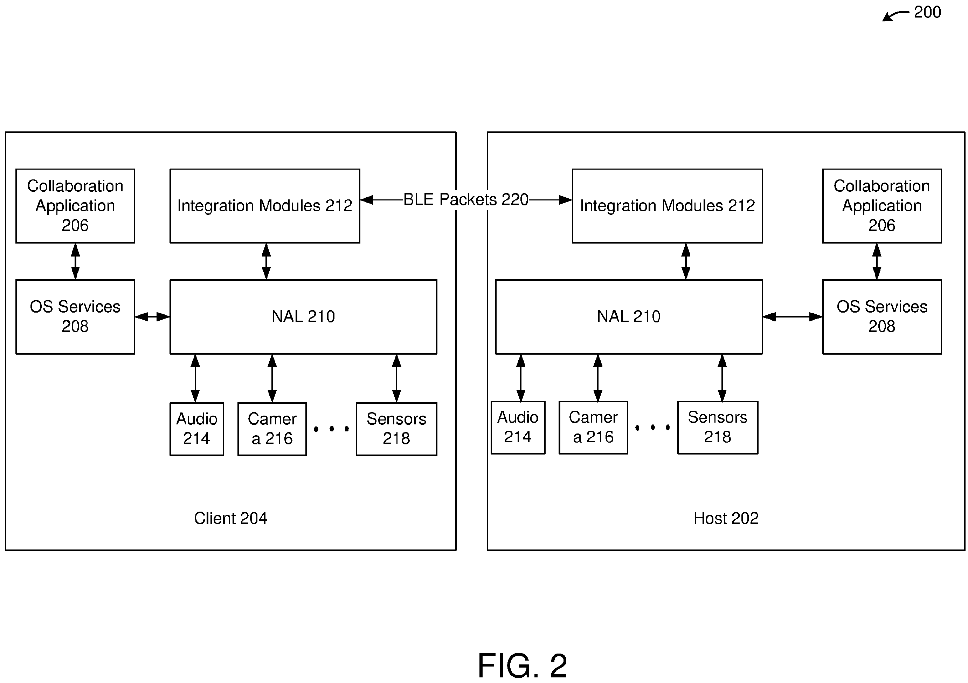

FIG. 2 is an example architecture 200 for wireless control of audio and video in a collaboration call, in accordance with one or more example embodiments of the present disclosure. The architecture 200 of FIG. 2 may be implemented in any of the devices in FIG. 1, for example, to facilitate the BLE advertising, authentication for a collaboration session, and controlling of authenticated devices.

Referring to FIG. 2, a host device 202 may refer to the primary device 102 of FIG. 1, and a client device 204 may refer to nearby devices that are not the primary device 102. The host device 202 and the client device 204 may execute a collaboration application 206 (e.g., virtual meeting application or other collaboration application through which devices may use audio and/or video to communicate with each other). The host device 202 and the client device 204 may include an operating system (OS) and corresponding OS services 208, which may execute programs such as the collaboration application 206. The host device 202 and the client device 204 may include a NAL 210 in communication with the OS services 208 and integration modules 212. The NAL 210 may facilitate the BLE-based detection and controls. The integration modules 212 may integrates the devices with other devices by using communications protocols such as Bluetooth, Wi-Fi, and the like. The NAL 210 may communicate with audio 214 (e.g., speakers and their volume), one or more cameras 216, and other sensors 218 to control volume, video settings and output, and other sensor levels and configurations. The integration modules 212 may exchange BLE packets 220, such as BLE advertising packets, authentication requests and responses, and BLE controls for the audio 214, the camera 216, and/or the sensors 218.

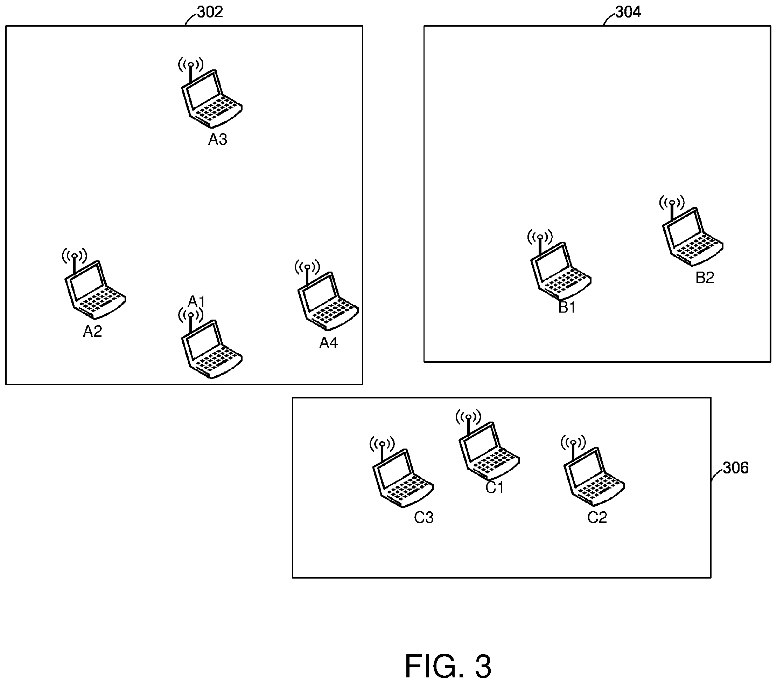

FIG. 3 is an example of conference rooms with collaboration call participants in various topologies, in accordance with one or more example embodiments of the present disclosure.

Referring to the example of FIG. 3, three conference rooms (e.g., room 302, room 304, and room 306) may host participants of a same collaboration session. For example, in room 302 may be device A1, device A2, device A3, and device A4 in one orientation relative to each other. In room 304 may be device B1 and device B2 in an orientation relative to each other. In room 306 may be device C1, device C2, and device C3 in an orientation relative to each other. The number of rooms and devices, and their orientations, may vary. Not all devices in a particular room may be invited to and/or may attempt to access a collaboration session (e.g., hosted by the collaboration application 206 of FIG. 2).

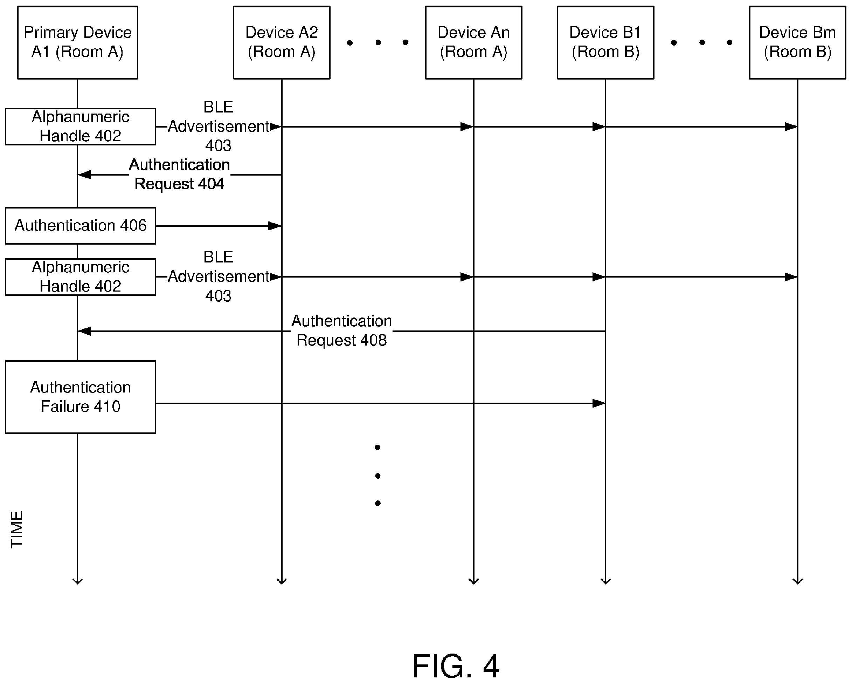

One of the devices in each room may serve as the primary device 202. For each room with participants in the collaboration session, the unique hash may be generated by the collaboration application 206. Table 1 above shows example alphanumeric handles created for a collaboration session and room. The primary device in each room may have the alphanumeric handle, and may include it in a BLE advertisement packet. For example, if device A1 is the primary device in room 302, the device A1 may send a BLE advertisement packet including the alphanumeric handle for the collaboration session and for the room 302. Any device that receives the BLE advertisement packet may respond with an authentication request. However, each device in a respective room may include the alphanumeric handle for the collaboration session and the respective room, so only the devices requesting authentication using the same alphanumeric handle as the one sent by a respective primary device may be authenticated to the primary device for that collaboration session. An example of the BLE advertising and authentication is shown in FIG. 4.

FIG. 4 is an example flow for a process 400 for authenticating devices for a collaboration call, in accordance with one or more example embodiments of the present disclosure.

Referring to FIG. 4, a primary device A1 (e.g., in a room A) may include an alphanumeric handle 402 for a collaboration session and the room (e.g., according to Table 1) in a BLE advertising packet 403 broadcast (e.g., to a BLE range 120 of FIG. 1). The BLE advertising packet 403 may be formatted according to Tables 2-4, for example, and may be received by any devices within the BLE range of the primary device A1. Any device that receives the BLE advertising packet 403 may respond with an authentication request to the primary device A1 as long as the requesting device has accessed the collaboration application hosting the collaboration session and therefore has access to the respective alphanumeric handle for the session and the respective room. The authentication request may include the requesting device's alphanumeric handle. For example, device A2 in room A may send an authentication request, including the alphanumeric handle for room A and the collaboration session, to the primary device A1. The primary device A1 may determine whether the alphanumeric handle of the authentication request 404 matches the alphanumeric handle 402. When the alphanumeric handle 402 is included in the authentication request 404, then the device A2 may be identified as in room A and in the same collaboration session, so the primary device A1 may authenticate 406 the device A2 and send an authentication response confirming the authentication to the device A2.

Still referring to FIG. 4, the primary device A2 may continue to send the BLE advertising packet 403 with the alphanumeric handle 402 periodically. A device B1 in another room (e.g., room B) may be within the BLE range of the primary device A1 and therefore may receive the BLE advertisement packet 403. The device B1 may response with an authentication request 408 to the primary device A1. However, the device B1 may be provided with an alphanumeric handle for the collaboration session and for room B when the device B1 joins the collaboration session, so the authentication request 408 may include the room B alphanumeric handle that does not match the alphanumeric handle 402 for room A. As a result, the primary device A1 may reject the authentication request 408 of the device B1, and may send an authentication response to the device B1 indicating authentication failure 410.

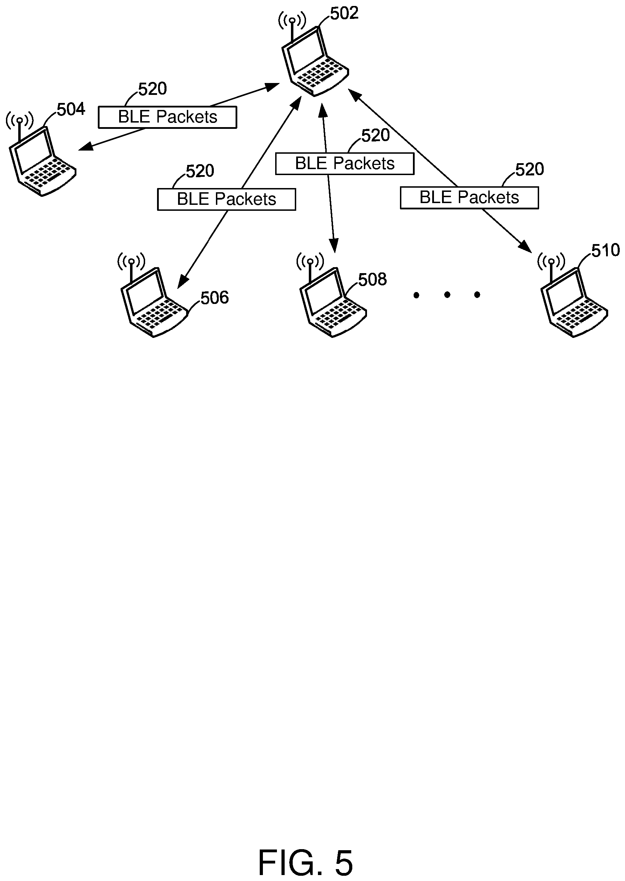

FIG. 5 is an example network 500 of a primary device 502 controlling other devices in a collaboration call, in accordance with one or more example embodiments of the present disclosure.

Referring to FIG. 5, the primary device 502 may advertise a collaboration session to other nearby devices (e.g., devices 504, 506, 508, and 510) using BLE advertising packets (e.g., BLE packets 520). The BLE packets 520 may include any of the packet transmissions in FIG. 4, for example. The BLE packets 520 also may include the payload data of Table 3 to instruct the other devices (e.g., once authenticated to the primary device 502) to control their audio, video, and the like.

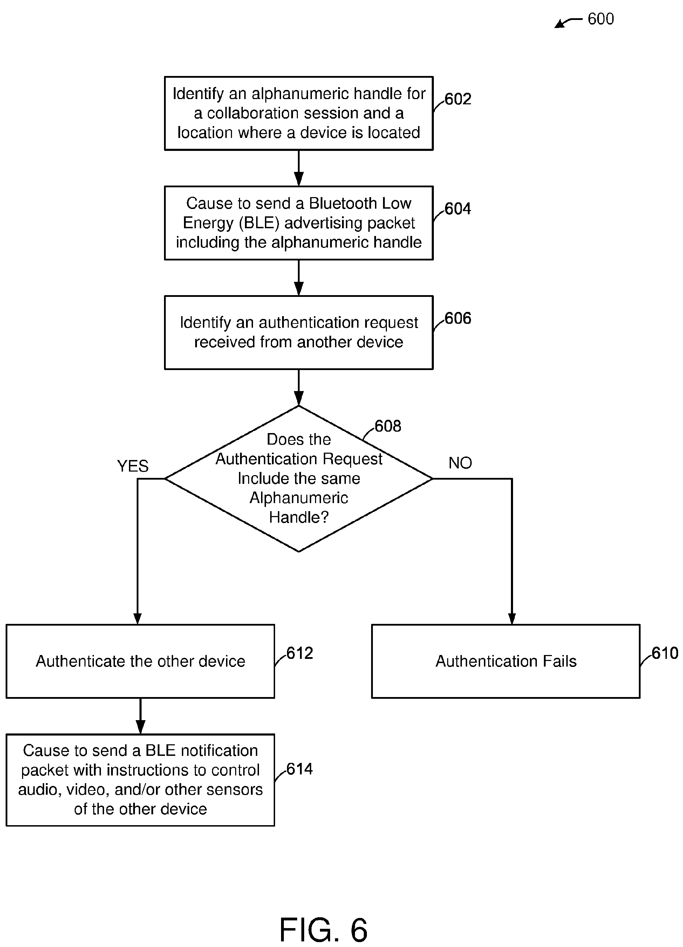

FIG. 6 is a flow for an example process 600 of wirelessly controlling audio and video of other devices in a collaboration call, in accordance with one or more example embodiments of the present disclosure.

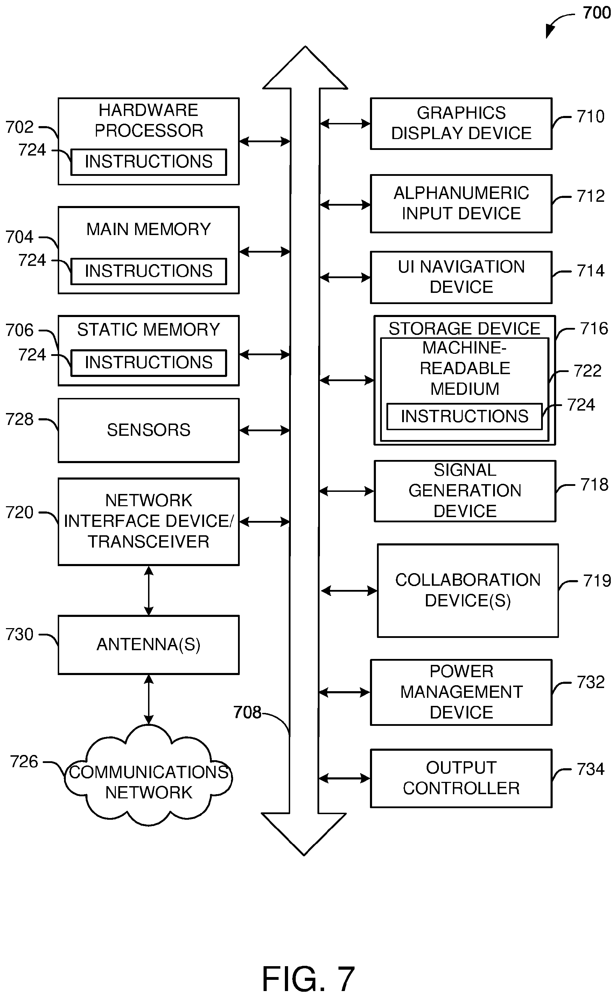

At block 602, a device (e.g., the collaboration device 719 of FIG. 7) may identify an alphanumeric handle for a collaboration session and a location where a device is located. The device may be a primary device that has joined a collaboration session based on execution of a collaboration application, and may be provided with the alphanumeric handle by the collaboration application. The alphanumeric handle may be a hash or other combination of an identifier for the collaboration session and an identifier for the location (e.g., room).

At block 604, the device may cause to send a BLE advertising packet that includes the alphanumeric handle. The device periodically may send the BLE advertising packet as long as the device is the primary device for a given location.

At block 606, the device may identify an authentication request received from another device that received the BLE advertising packet. The authentication request may include the alphanumeric handle when the other device is at the same location, or may include a different alphanumeric handle when the other device is in another location with a different location identifier used in the other alphanumeric handle.

At block 608, the device may determine whether to authenticate the other device based on whether the authentication request includes the same alphanumeric handle (e.g., indicating that the other device has accessed the same collaboration session and is at a same location as the primary device). When the other device uses a different alphanumeric handle than the one in the BLE advertising packet, then at block 610, the device may reject the authentication request and notify the other device that authentication has failed.

At block 612, when the authentication request includes the same alphanumeric handle as the one in the BLE advertising packet, the device may authenticate the other device. The device may include an NAL to establish an application profile over a connection with authenticated devices for the collaboration session.

At block 614, the device may cause to send a BLE notification packet with instructions to control audio, video, and/or other settings of the other device (e.g., according to Table 4). In this manner, the device may mute or otherwise reduce the volume of a speaker on the other device, and/or may mute a microphone of the other device, to avoid echo in the collaboration session.

FIG. 7 illustrates a block diagram of an example of a machine 700 or system upon which any one or more of the techniques (e.g., methodologies) discussed herein may be performed. In other embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environments. The machine 700 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 700 may include a hardware processor 702 (e.g., a central processing unit (CPU), a graphics processing unit (GPU), a hardware processor core, or any combination thereof), a main memory 704 and a static memory 706, some or all of which may communicate with each other via an interlink (e.g., bus) 708. The machine 700 may further include a power management device 732, a graphics display device 710, an alphanumeric input device 712 (e.g., a keyboard), and a user interface (UI) navigation device 714 (e.g., a mouse). In an example, the graphics display device 710, alphanumeric input device 712, and UI navigation device 714 may be a touch screen display. The machine 700 may additionally include a storage device (i.e., drive unit) 716, a signal generation device 718 (e.g., a speaker), one or more collaboration devices 719, a network interface device/transceiver 720 coupled to antenna(s) 730, and one or more sensors 728, such as a global positioning system (GPS) sensor, a compass, an accelerometer, or other sensor. The machine 700 may include an output controller 734, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 702 for generation and processing of the baseband signals and for controlling operations of the main memory 704, the storage device 716, and/or the one or more collaboration devices 719. The baseband processor may be provided on a single radio card, a single chip, or an integrated circuit (IC).

The storage device 716 may include a machine readable medium 722 on which is stored one or more sets of data structures or instructions 724 (e.g., software) embodying or utilized by any one or more of the techniques or functions described herein. The instructions 724 may also reside, completely or at least partially, within the main memory 704, within the static memory 706, or within the hardware processor 702 during execution thereof by the machine 700. In an example, one or any combination of the hardware processor 702, the main memory 704, the static memory 706, or the storage device 716 may constitute machine-readable media.

The one or more collaboration devices 719 may carry out or perform any of the operations and processes (e.g., process 600 of FIG. 6) described and shown above.

It is understood that the above are only a subset of what the one or more collaboration devices 719 may be configured to perform and that other functions included throughout this disclosure may also be performed by the one or more collaboration devices 719. For example, the one or more collaboration devices 719 represent at least a portion of the components in FIG. 2 for a primary or client device, and may perform any of the operations described in FIGs. 1-5, including the process 600.

While the machine-readable medium 722 is illustrated as a single medium, the term "machine-readable medium" may include a single medium or multiple media (e.g., a centralized or distributed database, and/or associated caches and servers) configured to store the one or more instructions 724.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 700 and that cause the machine 700 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 724 may further be transmitted or received over a communications network 726 using a transmission medium via the network interface device/transceiver 720 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 720 may include one or more physical jacks (e.g., Ethernet, coaxial, or phone jacks) or one or more antennas to connect to the communications network 726. In an example, the network interface device/transceiver 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 700 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an onboard device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

The following examples pertain to further embodiments.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an onboard device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-M11, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

Various embodiments are described below.

Example 1 may include an apparatus of a device, the apparatus comprising processing circuitry coupled to storage for storing instructions associated with remotely controlling device settings for collaboration sessions, the processing circuitry configured to: identify an alphanumeric handle based on a location identifier of a first location associated with the device and a collaboration session identifier for a collaboration session of a collaboration application executed by the device; generate a Bluetooth Low Energy (BLE) advertising packet comprising a header and a payload, wherein the header comprises the alphanumeric handle and a hardware identifier that identifies the device; cause the device to transmit the BLE advertising packet; identify an authentication request received from a second device in the collaboration session, the authentication request comprising the alphanumeric handle; authenticate the second device based on the alphanumeric handle; and cause the device to transmit a BLE notification packet comprising an indication of a volume at which the second device is to set a speaker for the collaboration session.

Example 2 may include the apparatus of example 1 and/or any other example herein, wherein to authenticate the second device comprises to identify identification details (e.g. email address, name) of a user of the second device in addition to the alphanumeric handle, and to verify, using the collaboration application, that the user by in included in an invitee's list for the collaboration session.

Example 3 may include the apparatus of example 1 and/or any other example herein, wherein the BLE notification packet further comprises the header and the payload, and wherein the payload comprises an audio data sub-field comprising the indication of the volume.

Example 4 may include the apparatus of example 3 and/or any other example herein, wherein the BLE notification packet further comprises a video data sub-field, a camera data sub-field, and a sensor data sub-field.

Example 5 may include the apparatus of example 3 and/or any other example herein, wherein the BLE notification packet further comprises a second indication that the second device is to restore the volume to a previous volume level upon conclusion of the collaboration session.

Example 6 may include the apparatus of example 1 and/or any other example herein, wherein the processing circuitry is further configured to: identify a second authentication request received from a third device, the second authentication request comprising a second alphanumeric handle based on the collaboration session identifier and a second location identifier of a second location different than the first location; and determine that authentication of the third device fails based on the second alphanumeric handle being different than the alphanumeric handle.

Example 7 may include the apparatus of example 1 and/or any other example herein, wherein the processing circuitry further comprises a network abstraction layer configured to establish an application profile over a connection with the second device.

Example 8 may include the apparatus of example 1 and/or any other example herein, further comprising a transceiver configured to transmit and receive wireless signals comprising the BLE advertising packet and the BLE notification packet.

Example 9 may include the apparatus of example 8 and/or any other example herein, further comprising an antenna coupled to the transceiver to cause to send the BLE advertising packet and the BLE notification packet.

Example 10 may include a non-transitory computer-readable storage medium comprising instructions to cause processing circuitry of a device for remotely controlling device settings for collaboration sessions, upon execution of the instructions by the processing circuitry, to: identify an alphanumeric handle based on a location identifier of a first location associated with the device and a collaboration session identifier for a collaboration session of a collaboration application executed by the device; generate a Bluetooth Low Energy (BLE) advertising packet comprising a header and a payload, wherein the header comprises the alphanumeric handle and a hardware identifier that identifies the device; cause the device to transmit the BLE advertising packet; identify an authentication request received from a second device in the collaboration session, the authentication request comprising the alphanumeric handle; authenticate the second device based on the alphanumeric handle; and cause the device to transmit a BLE notification packet comprising an indication of a volume at which the second device is to set a speaker for the collaboration session.

Example 11 may include the non-transitory computer-readable storage medium of example 10 and/or any other example herein, wherein to authenticate the second device comprises to identify identification details (e.g. email address, name) of a user of the second device in addition to the alphanumeric handle, and to verify, using the collaboration application, that the user by in included in an invitee's list for the collaboration session.

Example 12 may include the non-transitory computer-readable storage medium of example 10 and/or any other example herein, wherein the BLE notification packet further comprises the header and the payload, and wherein the payload comprises an audio data sub-field comprising the indication of the volume.

Example 13 may include the non-transitory computer-readable storage medium of example 12 and/or any other example herein, wherein the BLE notification packet further comprises a video data sub-field, a camera data sub-field, and a sensor data sub-field.

Example 14 may include the non-transitory computer-readable storage medium of example 12 and/or any other example herein, wherein the BLE notification packet further comprises a second indication that the second device is to restore the volume to a previous volume level upon conclusion of the collaboration session.

Example 15 may include the non-transitory computer-readable storage medium of example 10 and/or any other example herein, wherein the processing circuitry further comprises a network abstraction layer, and wherein execution of the instructions further causes the network abstraction layer to establish an application profile over a connection with the second device.

Example 16 may include the non-transitory computer-readable storage medium of example 10 and/or any other example herein, wherein execution of the instructions further causes the processing circuitry to: identify a second authentication request received from a third device, the second authentication request comprising a second alphanumeric handle based on the collaboration session identifier and a second location identifier of a second location different than the first location; and determine that authentication of the third device fails based on the second alphanumeric handle being different than the alphanumeric handle.

Example 17 may include a method for remotely controlling device settings for collaboration sessions, the method comprising: identifying, by processing circuitry of a first device, an alphanumeric handle based on a location identifier of a first location associated with the first device and a collaboration session identifier for a collaboration session of a collaboration application executed by the first device; generating, by the processing circuitry, a Bluetooth Low Energy (BLE) advertising packet comprising a header and a payload, wherein the header comprises the alphanumeric handle and a hardware identifier that identifies the first device; causing, by the processing circuitry, the first device to transmit the BLE advertising packet; identifying, by the processing circuitry, an authentication request received from a second device in the collaboration session, the authentication request comprising the alphanumeric handle; authenticating, by the processing circuitry, the second device based on the alphanumeric handle; and causing, by the processing circuitry, the first device to transmit a BLE notification packet comprising an indication of a volume at which the second device is to set a speaker for the collaboration session.

Example 18 may include the method of example 17 and/or any other example herein, wherein authenticating the second device comprises identifying identification details (e.g. email address, name) of a user of the second device in addition to the alphanumeric handle, and verifying, using the collaboration application, that the user by in included in an invitee's list for the collaboration session.

Example 19 may include the method of example 17 and/or any other example herein, wherein the BLE notification packet further comprises the header and the payload, and wherein the payload comprises an audio data sub-field comprising the indication of the volume.

Example 20 may include the method of example 19 and/or any other example herein, wherein the BLE notification packet further comprises a video data sub-field, a camera data sub-field, and a sensor data sub-field.

Example 21 may include an apparatus comprising means for identifying an alphanumeric handle based on a location identifier of a first location associated with the apparatus and a collaboration session identifier for a collaboration session of a collaboration application executed by the apparatus; generating a Bluetooth Low Energy (BLE) advertising packet comprising a header and a payload, wherein the header comprises the alphanumeric handle and a hardware identifier that identifies a first device comprising the apparatus; causing the first device to transmit the BLE advertising packet; identifying an authentication request received from a second device in the collaboration session, the authentication request comprising the alphanumeric handle; authenticating the second device based on the alphanumeric handle; and causing the first device to transmit a BLE notification packet comprising an indication of a volume at which the second device is to set a speaker for the collaboration session.

Example 22 may include one or more non-transitory computer-readable media comprising instructions to cause an electronic device, upon execution of the instructions by one or more processors of the electronic device, to perform one or more elements of a method described in or related to any of examples 1-21, or any other method or process described herein.

Example 23 may include an apparatus comprising logic, modules, and/or circuitry to perform one or more elements of a method described in or related to any of examples 1-21, or any other method or process described herein.

Example 24 may include a method, technique, or process as described in or related to any of examples 1-21, or portions or parts thereof.

Example 25 may include an apparatus comprising: one or more processors and one or more computer readable media comprising instructions that, when executed by the one or more processors, cause the one or more processors to perform the method, techniques, or process as described in or related to any of examples 1-21, or portions thereof.

Example 26 may include a method of communicating in a wireless network as shown and described herein.

Example 27 may include a system for providing wireless communication as shown and described herein.

Example 28 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE'' as used herein refers to a device with radio communication capabilities and may describe a remote user of network resources in a communications network. The term "user equipment" or "UE'' may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE'' may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

## Claims

1. An apparatus of a device, the apparatus comprising processing circuitry coupled to storage for storing instructions associated with remotely controlling device settings for collaboration sessions, the processing circuitry configured to:
identify an alphanumeric handle based on a location identifier of a first location associated with the device and a collaboration session identifier for a collaboration session of a collaboration application executed by the device;
generate a Bluetooth Low Energy (BLE) advertising packet comprising a header and a payload, wherein the header comprises the alphanumeric handle and a hardware identifier that identifies the device;
cause the device to transmit the BLE advertising packet;
identify an authentication request received from a second device in the collaboration session, the authentication request comprising the alphanumeric handle;
authenticate the second device based on the alphanumeric handle; and
cause the device to transmit a BLE notification packet comprising an indication of a volume at which the second device is to set a speaker for the collaboration session.

2. The apparatus of claim 1, wherein to authenticate the second device comprises to identify identification details (e.g. email address, name) of a user of the second device in addition to the alphanumeric handle, and to verify, using the collaboration application, that the user by in included in an invitee's list for the collaboration session.

3. The apparatus of claim 1, wherein the BLE notification packet further comprises the header and the payload, and wherein the payload comprises an audio data sub-field comprising the indication of the volume.

4. The apparatus of claim 3, wherein the BLE notification packet further comprises a video data sub-field, a camera data sub-field, and a sensor data sub-field.

5. The apparatus of claim 3, wherein the BLE notification packet further comprises a second indication that the second device is to restore the volume to a previous volume level upon conclusion of the collaboration session.

6. The apparatus of claim 1, wherein the processing circuitry is further configured to:
identify a second authentication request received from a third device, the second authentication request comprising a second alphanumeric handle based on the collaboration session identifier and a second location identifier of a second location different than the first location; and
determine that authentication of the third device fails based on the second alphanumeric handle being different than the alphanumeric handle.

7. A computer-readable storage medium comprising instructions to cause processing circuitry of a device for remotely controlling device settings for collaboration sessions, upon execution of the instructions by the processing circuitry, to:
identify an alphanumeric handle based on a location identifier of a first location associated with the device and a collaboration session identifier for a collaboration session of a collaboration application executed by the device;
generate a Bluetooth Low Energy (BLE) advertising packet comprising a header and a payload, wherein the header comprises the alphanumeric handle and a hardware identifier that identifies the device;
cause the device to transmit the BLE advertising packet;
identify an authentication request received from a second device in the collaboration session, the authentication request comprising the alphanumeric handle;
authenticate the second device based on the alphanumeric handle; and
cause the device to transmit a BLE notification packet comprising an indication of a volume at which the second device is to set a speaker for the collaboration session.

8. The computer-readable storage medium of claim 7, wherein to authenticate the second device comprises to identify identification details (e.g. email address, name) of a user of the second device in addition to the alphanumeric handle, and to verify, using the collaboration application, that the user by in included in an invitee's list for the collaboration session.

9. The computer-readable storage medium of claim 7, wherein the BLE notification packet further comprises the header and the payload, and wherein the payload comprises an audio data sub-field comprising the indication of the volume.

10. The computer-readable storage medium of claim 9, wherein the BLE notification packet further comprises a video data sub-field, a camera data sub-field, and a sensor data sub-field.

11. The computer-readable storage medium of claim 9, wherein the BLE notification packet further comprises a second indication that the second device is to restore the volume to a previous volume level upon conclusion of the collaboration session.

12. A method for remotely controlling device settings for collaboration sessions, the method comprising:
identifying, by processing circuitry of a first device, an alphanumeric handle based on a location identifier of a first location associated with the first device and a collaboration session identifier for a collaboration session of a collaboration application executed by the first device;
generating, by the processing circuitry, a Bluetooth Low Energy (BLE) advertising packet comprising a header and a payload, wherein the header comprises the alphanumeric handle and a hardware identifier that identifies the first device;
causing, by the processing circuitry, the first device to transmit the BLE advertising packet;
identifying, by the processing circuitry, an authentication request received from a second device in the collaboration session, the authentication request comprising the alphanumeric handle;
authenticating, by the processing circuitry, the second device based on the alphanumeric handle; and
causing, by the processing circuitry, the first device to transmit a BLE notification packet comprising an indication of a volume at which the second device is to set a speaker for the collaboration session.

13. The method of claim 12, wherein authenticating the second device comprises identifying identification details (e.g. email address, name) of a user of the second device in addition to the alphanumeric handle, and verifying, using the collaboration application, that the user by in included in an invitee's list for the collaboration session.

14. The method of claim 12, wherein the BLE notification packet further comprises the header and the payload, and wherein the payload comprises an audio data sub-field comprising the indication of the volume.

15. The method of claim 14, wherein the BLE notification packet further comprises a video data sub-field, a camera data sub-field, and a sensor data sub-field.
